# EUROPÄISCHE PATENTSCHRIFT

(11) **EP 2 794 297 B1**
(45) Veröffentlichungstag und Bekanntmachung des Hinweises auf die Patenterteilung: **04.10.2017**
(21) Anmeldenummer: 12797889.8
(22) Anmeldetag: 05.12.2012
(51) Int. Cl.: B60C 11/01, B60C 11/03, B60C 11/13

(54) **FAHRZEUGLUFTREIFEN**
PNEUMATIC TIRE
PNEU

(30) Priorität: 19.12.2011 DE 102011056636
(43) Veröffentlichungstag der Anmeldung: 29.10.2014
(73) Patentinhaber: Continental Reifen Deutschland GmbH, 30165 Hannover (DE)
(72) Erfinder: BEHR, Ulrich, 30169 Hannover (DE)
(74) Vertreter: Finger, Karsten
(86) Internationale Anmeldenummer: PCT/EP2012/074411
(87) Internationale Veröffentlichungsnummer: WO 2013/092206

(56) Entgegenhaltungen:
- EP-A2- 0 989 000
- US-A1- 2003 094 227
- Dirk Behlau: "Zoe Scarlett for Walz Hardcore Cycles", flickr.com , 26. Mai 2008 (2008-05-26), XP002692863, Gefunden im Internet: URL:http://www.flickr.com/photos/pixeleye/ 2523270023/in/photostream/ [gefunden am 2013-02-26]
- "HEIDENAU K58 SnowTex- 120/70 - 12 TL 58P", scooter-center.com , 11. November 2011 (2011-11-11), XP002692864, Gefunden im Internet: URL:http://www.scooter-center.com/product/ 6000123/12070+12+TL+58P;jsessionid=291F8ED 598840DFF2078CE7FC7170FE4.sco3 [gefunden am 2013-02-26]
- luxlow.com: "Tire: 24''x 3'' City Slick Chopper Cruiser Bicycle Tire", , 11. November 2011 (2011-11-11), XP002692865, Gefunden im Internet: URL:http://luxlow.com/products-page/ll-bic ycle-tires-classic-fat-tire-cruiser-mega-c hopper-slicks/tire-24x-3-city-slick-choppe r-cruiser-bicycle-tire/ [gefunden am 2013-02-26]
- letitrollbikes: "BICYCLE TIRE 20 X 3.0 ALL BLACK SLICK CHOPPER BEACH CRUISER LOWRIDER BMX MTB", ebay.com , 13. Mai 2011 (2011-05-13), XP002692866, Gefunden im Internet: URL:http://www.ebay.com/itm/BICYCLE-TIRE-2 0-X-3-0-ALL-BLACK-SLICK-CHOPPER-BEACH-CRUI SER-LOWRIDER-BMX-MTB-/150769822930 [gefunden am 2013-02-26]

## Beschreibung

Die Erfindung betrifft einen Fahrzeugluftreifen mit einem Laufstreifen, welcher zumindest einen blockartig strukturierten, in Umfangsrichtung umlaufenden Umfangsbereich aufweist, in welchem in axialer Richtung verlaufende Querrillen ausgebildet sind, deren laufstreifeninnenseitig gelegenen Enden sich innerhalb des Umfangsbereiches befinden und jeweils eine zwischen der Laufstreifenperipherie und dem Rillenboden verlaufende Eckflanke aufweisen, *welche im laufstreifeninnenseitigen Ende der Querrille in Draufsicht im Wesentlichen halbkreisförmig verläuft und am Rillenboden in einen Endabschnitt des Rillenbodens übergeht, welcher im Wesentlichen kugelabschnittsförmig geformt ist.*

Fahrzeugluftreifen mit einem Laufstreifen mit derart ausgeführten Querrillen sind aus dem Stand der Technik bekannt. Diesbezüglich wird beispielsweise auf Dirk Behlau, "Zoe Scarlett for Walz Hardcore Cycles", 26. Mai 2008, flickr.com; "HEIDENAU K58 SnowTex - 120/70 - 12 TL 58P", 11. November 2011, scooter-center.com; "Tire: 24"×3" City Slick Chopper Cruiser Bicycle Tire", 11. November 2011, luxlow.com; sowie *letitrollbikes*, "BICYCLE TIRE 20 X 3.0 ALL BLACK SLICK CHOPPER BEACH CRUISER LOWRIDER BMX MTB", 13. Mai 2011, ebay.com, verwiesen. Die US 2003/094227 A1 zeigt einen Fahrzeugluftreifen mit einem Laufstreifen mit Umfangsrillen, von welchen kurze Querrillen in Profilbänder hineinverlaufen, wobei diese Querrillen im Wesentlichen halbkreisförmige Enden aufweisen und an ihrem Endabschnitt am Rillenboden im Wesentlichen kugelabschnittsförmig geformt sind. Die EP 0 989 000 A2 offenbart im Laufstreifen ausgebildete, gerundete Hohlraum-Resonatoren, die mit Profilrillen des Laufstreifens in Verbindung stehen können.

Ein weiterer Fahrzeugluftreifen ist aus der DE 10 2009 044 361 A1 bekannt. Die Eckflanke am geschlossenen laufstreifeninnenseitigen Ende der Querrillen ist eine Böschungsflanke, welche im Längsschnitt der Querrille im Wesentlichen entlang einer gering gekrümmten S-Form verläuft und mit Übergangsabschnitten gerundete Übergänge zur Laufstreifenperipherie und zum Rillenboden bildet. Die derart ausgeführten Böschungsflanken sind für das Wasserableitvermögen der Querrillen von Vorteil, da sie Verwirbelungen vermeiden und sich positiv auf die Steifigkeit der umgebenden Profilpositive auswirken. Aus der DE 10 2010 000 414 A1 ist ein Fahrzeugluftreifen bekannt, dessen Laufstreifenprofilblöcke jeweils zumindest einen einspringenden Eckbereich aufweisen, welcher zwischen zwei im Wesentlichen rechte Winkel einschließenden Blockflanken gebildet ist. Der einspringende Eckbereich ist durch ein im Eck positioniertes Stützelement stabilisiert, welches eine in Richtung Blockoberfläche spitzer werdende Gestalt aufweist. An dem spitzer werdenden, der Profilblockoberfläche zugewandten Ende des Stützelementes ist eine Aussparung vorgesehen, welche derart gestaltet ist, dass im Betriebszustand des Reifens auftretende Spannungen besser verteilt werden.

Der Erfindung liegt die Aufgabe zugrunde, einen Fahrzeugluftreifen der eingangs genannten Art zu verbessern, insbesondere soll die Geometrie der Querrillen derart ausgelegt werden, dass die Gefahr des Entstehens von Kerbspannungen reduziert wird, um bei den im Betrieb des Reifens auftretenden Längs- und Querkräften das Entstehen von Einrissen im Gummimaterial zu verhindern.

Gelöst wird die gestellte Aufgabe erfindungsgemäß dadurch, dass *zumindest eine der die Querrille begrenzenden Rillenflanken und die Eckflanke an der Laufstreifenperipherie abgeschrägt bzw. angefast, wobei bei neuem Reifen entlang der Rillenflanke und der Rundung der Eckflanke eine Fase verläuft, welche nach Umlaufen der Eckflankenrundung ausläuft.*

Die Erfindung vermeidet daher an besonders kritischen Stellen, nämlich an den laufstreifeninnenseitigen Enden der Querrillen, eine kantige, eckige Ausführung, sodass kaum Kerbspannungen auftreten können, die zu Einrissen im Gummimaterial führen könnten. Um eine gute Stabilisierung der Querrillenkanten zu gewährleisten, ist es günstig, wenn zumindest eine der die Querrille begrenzenden Rillenflanken angefast ist und wenn die Fase an der Eckflanke, diese an der Laufstreifenperipherie etwa halbkreisförmig umlaufend, fortgesetzt ist.

Für eine gute Verteilung der auftretenden Längs- und Querkräfte ist es vorteilhaft, wenn der im Wesentlichen kugelabschnittsförmige Endabschnitt des Rillenbodens einen Radius von 2 mm bis 4 mm, insbesondere von 3 mm, aufweist

Zur Vermeidung von Kerbspannungen verursachenden Ecken sollte gemäß der Erfindung der die Eckflanke umlaufende Abschnitt der Fase an der zweiten Rillenflanke tangential auslaufen.

Einige weitere Maßnahmen tragen dazu bei, den im Betrieb des Reifens in Richtung Profilmitte größeren Längs- und Querkräften entgegenzuwirken.

Zu diesen Maßnahmen gehört insbesondere, dass der Winkel, den die Fase entlang ihres Verlaufes an der Rillenflanke mit der radialen Richtung einschließt, zur Eckflanke zunimmt.

Weitere diesbezüglich vorteilhafte Ausgestaltungen der Erfindung sehen vor, dass die Fase entlang der Rillenflanke unter einem Winkel zur radialen Richtung verläuft, welcher bis zu 45° größer ist als der Neigungswinkel der Rillenflanke relativ zur radialen Richtung, und dass die Fase in ihrem die Eckflanke umlaufenden Abschnitt einen bis zu 15° größeren Winkel mit der radialen Richtung einschließt als in ihrem entlang der Rillenflanke verlaufenden Abschnitt.

Auch die Erstreckung der Fase in radialer Richtung wirkt sich auf die Stabilisierung des Laufstreifenbereiches positiv aus. Vorteilhaft ist es, wenn die Höhe der Fase in radialer Richtung bis zu 3 mm beträgt und wenn insbesondere die Höhe der Fase zwischen dem laufstreifenaußenseitigen Ende der Querrille und der Eckflanke kontinuierlich größer wird.

Da in den Schulterbereichen des Laufstreifens besonders hohe Umfangs-und Querkräfte wirken, insbesondere beim Kurvenfahren mit höherer Geschwindigkeit, ist es besonders vorteilhaft, wenn die Schulterbereiche erfindungsgemäß ausgeführt werden. Dabei ist es vorrangig wichtig, dass im Außenschulterbereich des Laufstreifens ein erfindungsgemäß ausgeführter Umfangabschnitt vorgesehen wird. Gerade der Außenschulterbereich eines Reifens wird beim Kurvenfahren besonders belastet.

Beim Kurvenfahren mit höherer Geschwindigkeit kann eine weitere Maßnahme dazu beitragen, dass ein Auftreten von Kerbspannungen auch außerhalb der "normalen" Bodenaufstandsfläche vermieden wird. Diese Maßnahme besteht darin, die laufstreifenaußenseitigen Enden der Querrillen über gerundete Übergänge in seichte Rillen des Schulterdekors münden zu lassen.

Weitere Merkmale, Vorteile und Einzelheiten der Erfindung werden nun anhand der schematischen Zeichnung, die ein Ausführungsbeispiel darstellt, näher beschrieben. Dabei zeigen
- Fig. 1: eine Ansicht eines Umfangsbereiches eines Laufstreifens eines Fahrzeugluftreifens,
- Fig. 2: eine Schnittdarstellung entlang der Linie II-II der Fig. 1 und
- Fig. 3: eine Schnittdarstellung entlang der Linie III-III der Fig.1.

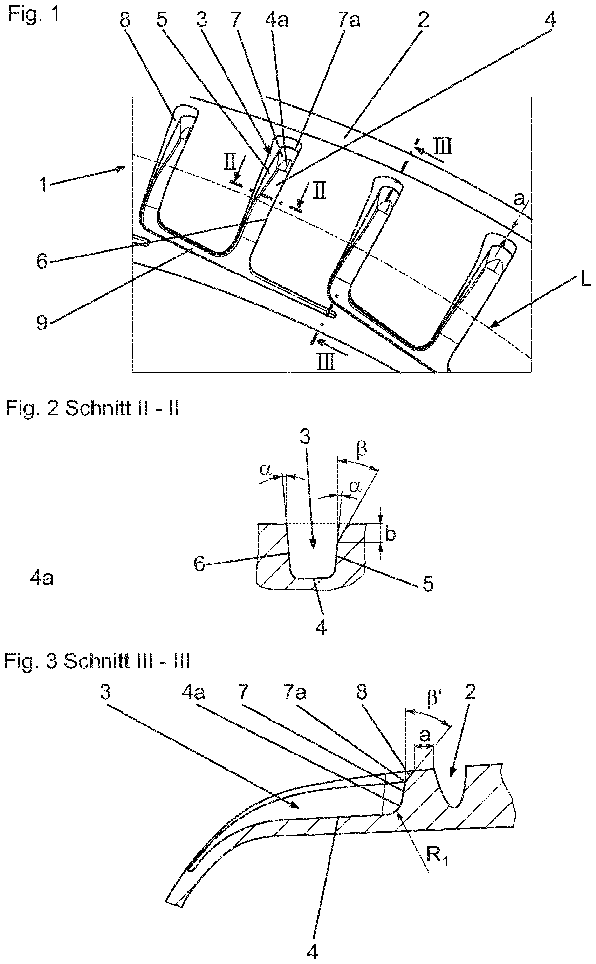

Fig. 1 zeigt einen Abschnitt eines bei einer Reifenschulter gelegenen, in Umfangsrichtung umlaufenden Umfangsbereiches 1 eines Laufstreifens eines Fahrzeugluftreifens in Radialbauart für Personenkraftwagen. Der im Wesentlichen blockartig strukturierte Umfangsbereich 1 ist durch eine in Umfangsrichtung umlaufende Umfangsrille 2 von den zur Laufstreifenmitte anschließenden Profilelementen, welche Profilblockreihen oder Profilrippen sein können, getrennt. Die im Wesentlichen in axialer Richtung und bei der gezeigten Ausführungsform leicht bogenförmig gekrümmt verlaufende Querrillen 3 verleihen dem Umfangsbereich 1 die erwähnte blockartige Struktur. Die Querrillen 3 weisen bei neuem Reifen an der Laufstreifenperipherie eine Breite von 4 mm bis 7 mm auf, enden in einem Abstand a von einigen Millimetern, insbesondere von 2 mm bis 5 mm, vor der Umfangsrille 2 und münden somit in diese nicht ein. Die Querrillen 3 erstrecken sich über den Reifenschulterbereich und verlaufen über die Breite des den Boden berührenden Teils des Laufstreifens, dessen seitlicher Rand mit der Linie L gekennzeichnet ist, hinaus. Der bodenberührende Teil des Laufstreifen entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar). Jede Querrille 3 ist von einem Rillenboden 4, zwei seitlichen Rillenflanken 5 und 6 sowie einer das geschlossene Ende der Querrille 3 umlaufenden Eckflanke 7 begrenzt. Die Querrille 3 weist ihre größte Tiefe bei der Eckflanke 7 auf, zum schulterseitigen und außerhalb der Bodenaufstandsfläche befindlichen Ende wird die Querrille 3 kontinuierlich seichter, sodass sie an diesem Ende praktisch keine nennenswerte Tiefe mehr aufweist.

Die Eckflanke 7 weist eine der Laufstreifenperipherie zugeordnete Begrenzungskante 7a auf, welche im Wesentlichen halbkreisförmig oder halbkreisähnlich verlaufend das Querrillenende begrenzt. Wie insbesondere die Schnittdarstellung in Fig. 3 zeigt, ist der am geschlossenen Ende der Querrille 3 befindliche Endabschnitt 4a des Rillenbodens 4 zur Eckflanke 7 - auch zu deren seitlichen, an die Rillenflanken 5, 6 anschließenden Bereichen mit einem Radius R₁ gerundet, welcher zwischen 2 mm und 4 mm, insbesondere etwa 3 mm, beträgt. Der Endabschnitt 4a des Rillenbodens 4 ist daher im Wesentlichen als ein Kugelabschnitt mit dem Radius R₁ ausgeführt. Die tatsächlich gewählte Größe des Radius R₁ bestimmt die jeweilige Neigung der Bereiche der Eckflanke 7 relativ zur radialen Richtung. Des Weiteren sind die Rillenflanke 5 und die Eckflanke 7 an der Laufstreifenperipherie abgeschrägt bzw. angefast, sodass bei neuem Reifen entlang der Rillenflanke 5 und der Rundung der Eckflanke 7 eine Fase 8 verläuft, welche nach Umlaufen der Eckflankenrundung ausläuft. Beide Rillenflanken 5 und 6 schließen mit der radialen Richtung kleine spitze Winkel α ein, welche zwischen 3° und 8°, insbesondere in der Größenordnung von 5°, betragen und für beide Rillenflanken 5 und 6 vorzugsweise gleich groß sind. Die Schrägstellung der Rillenflanken 5, 6 gegenüber der radialen Richtung erfolgt, wie es üblich ist, derart, dass die Breite der Querrille 3 vom Rillenboden 4 bis zur Laufstreifenperipherie größer wird. Die Fase 8 bewirkt eine weitere Verbreiterung der Querrille 3 nahe der Laufstreifenperipherie. Die Fase 8 erstreckt sich in radialer Richtung über einen Abstand b zwischen 0 mm und 3 mm, wobei b vom laufstreifenaußenseitigen Ende der Querrille 3 bis zur Eckflanke 7 kontinuierlich größer wird. Die Neigung der Fase 8 gegenüber der radialen Richtung erfolgt entlang der Rillenflanke 5 unter einem Winkel β, welcher bis zu 45° größer ist als der Winkel α und vorzugsweise zwischen 10° und 40°, insbesondere in der Größenordnung von 20° bis 30°, beträgt. Bei der Eckflankenrundung erfolgt vorzugsweise ein Übergang zu einem größeren Winkel β', welcher um bis 15° größer sein kann als β.

Die laufstreifenaußenseitig, jenseits der Bodenaufstandsflächenbreite befindlichen Enden der Querrillen 3 münden bei der gezeigten Ausführung in flache, sich in Umfangsrichtung erstreckende Rillen 9 eines Schulterdekors. Die Übergänge zwischen diesen Querrillenenden und den Rillen 9 sind gerundet ausgeführt. Diese Ausgestaltung ist besonders vorteilhaft, wenn der Umfangsbereich 1 an der Außenschulter des Laufstreifens bzw. Reifens angeordnet ist. Die Außenschulter ist jene Schulter, die bei montiertem Reifen an der Fahrzeugaußenseite zu sehen ist. Alternativ können die Querrillen 3 reifenschulterseitig geschlossen sein und insbesondere abgerundete Enden aufweisen.

Erfindungsgemäß ausgebildete Querrillen können auch in Profilelementen vorgesehen sein, welche im mittleren Bereich des Laufstreifens verlaufen. In diesem Fall münden die laufstreifenaußenseitigen Enden der Querrillen in eine Umfangsrille.

Erfindungsgemäß ausgeführte Umfangsbereiche sind bevorzugt in den Schulterbereichen des Laufstreifens vorgesehen, da die Schulterbereiche durch Quer- und Umfangskräfte besonders belastet werden. Die erfindungsgemäße Ausführung der Querrillen, insbesondere ihrer laufstreifeninnenseitig gelegenen Enden, sowie die Anordnung und Ausführung der Fasen verhindern weitgehend das Auftreten von Kerbspannungen, die zu Einrissen und Schäden im Laufstreifengummi führen können.

### Bezugszeichenliste

- 1: Umfangsbereich
- 2: Umfangsrille
- 3: Querrille
- 4: Rillenboden
- 4a: Endabschnitt
- 5: Rillenflanke
- 6: Rillenflanke
- 7: Eckflanke
- 7a: Kante
- 8: Fase
- 9: Rille
- a: Abstand
- b: Abstand
- R₁: Radius
- α: Winkel
- β: Winkel
- β': Winkel

## Patentansprüche

1. Fahrzeugluftreifen mit einem Laufstreifen, welcher zumindest einen blockartig strukturierten, in Umfangsrichtung umlaufenden Umfangsbereich (1) aufweist, in welchem in axialer Richtung verlaufende Querrillen (3) ausgebildet sind, deren laufstreifeninnenseitig gelegene Enden sich innerhalb des Umfangsbereichs (1) befinden und jeweils eine zwischen der Laufstreifenperipherie und dem Rillenboden (4) verlaufende Eckflanke (7) aufweisen, *welche im laufstreifeninnenseitigen Ende der Querrille (3) in Draufsicht im Wesentlichen halbkreisförmig verläuft und am Rillenboden (4) in einen Endabschnitt (4a) des Rillenbodens (4) übergeht, welcher im Wesentlichen kugelabschnittsförmig geformt ist,*
**dadurch gekennzeichnet,**
***dass*** *zumindest eine der die Querrille (3) begrenzenden Rillenflanken (5) und die Eckflanke (7) an der Laufstreifenperipherie abgeschrägt bzw.* angefast sind, *wobei bei neuem Reifen entlang der Rillenflanke (5) und der Rundung der Eckflanke (7) eine Fase (8) verläuft, welche nach Umlaufen der Eckflankenrundung ausläuft.*

2. Fahrzeugluftreifen nach Anspruch 1, **dadurch gekennzeichnet, dass** der im Wesentlichen kugelabschnittsförmige Endabschnitt (4a) des Rillenbodens (4) einen Radius (R₁) von 2 mm bis 4 mm, insbesondere von 3 mm, aufweist.

3. Fahrzeugluftreifen nach Anspruch 1, **dadurch gekennzeichnet, dass** der die Eckflanke (7) umlaufende Abschnitt der Fase (8) an der zweiten Rillenflanke (6) tangential ausläuft.

4. Fahrzeugluftreifen nach einem der Ansprüche 1 bis 3, **dadurch gekennzeichnet, dass** der Winkel (β), den die Fase (8) entlang ihres Verlaufes an der Rillenflanke (5) mit der radialen Richtung einschließt, zur Eckflanke (7) zunimmt.

5. Fahrzeugluftreifen nach einem der Ansprüche 1 bis 4, **dadurch gekennzeichnet, dass** die Fase (8) entlang der Rillenflanke (5) unter einem Winkel (β) zur radialen Richtung verläuft, welcher bis zu 45° größer ist als der Neigungswinkel der Rillenflanke (5) relativ zur radialen Richtung.

6. Fahrzeugluftreifen nach einem der Ansprüche 1 bis 5, **dadurch gekennzeichnet, dass** die Fase (8) in ihrem die Eckflanke (7) umlaufenden Abschnitt einen um bis zu 15° größeren Winkel (β') mit der radialen Richtung einschließt als in ihrem entlang der Rillenflanke (5) verlaufenden Abschnitt.

7. Fahrzeugluftreifen nach einem der Ansprüche 1bis 6, **dadurch gekennzeichnet, dass** Höhe der Fase (8) in radialer Richtung bis zu 3 mm beträgt.

8. Fahrzeugluftreifen nach einem der Ansprüche 1 bis 7, **dadurch gekennzeichnet, dass** die Höhe der Fase (8) zwischen dem laufstreifenaußenseitigen Ende der Querrille (3) und der Eckflanke (7) kontinuierlich größer wird.

9. Fahrzeugluftreifen nach einem der Ansprüche 1 bis 8, **dadurch gekennzeichnet, dass** der Umfangsabschnitt (1) im Schulterbereich des Laufstreifens angeordnet ist.

10. Fahrzeugluftreifen nach Anspruch 9, **dadurch gekennzeichnet, dass** der Umfangsabschnitt der Außenschulterbereich des Laufstreifens ist.

11. Fahrzeugluftreifen nach Anspruch 9 oder 10, **dadurch gekennzeichnet, dass** die laufstreifenaußenseitigen Enden der Querrillen (3) über gerundete Übergänge in seichte Rillen (9) des Schulterdekors münden, welche im Wesentlichen in Umfangsrichtung des Reifens verlaufen.

## Claims

1. Pneumatic vehicle tyre having a tread which has at least one circumferential region (1) structured in block-like fashion and running in encircling fashion in a circumferential direction, in which circumferential region there are formed transverse channels (3) running in an axial direction, those ends of which transverse channels which are situated towards the inside of the tread are situated within the circumferential region (1) and have in each case one corner flank (7) running between the tread periphery and the channel base (4), which corner flank, at that end of the transverse channel (3) which is situated towards the inside of the tread, runs in substantially semicircular form in plan view and transitions, at the channel base (4), into an end section (4a) of the channel base (4), which end section is of substantially spherical-segment-shaped form, **characterized**
**in that** at least one of the channel flanks (5) which delimit the transverse channel (3) and the corner flank (7) are chamfered or bevelled at the tread periphery, wherein, in the new state of the tyre, a bevel (8) runs along the channel flank (5) and along the rounding of the corner flank (7), which bevel tapers off after running around the corner flank rounding.

2. Pneumatic vehicle tyre according to Claim 1, **characterized in that** the substantially spherical-segment-shaped end section (4a) of the channel base (4) has a radius (R₁) of 2 mm to 4 mm, in particular of 3 mm.

3. Pneumatic vehicle tyre according to Claim 1, **characterized in that** that section of the bevel (8) which runs around the corner flank (7) tapers off tangentially at the second channel flank (6).

4. Pneumatic vehicle tyre according to one of Claims 1 to 3, **characterized in that** the angle (β) enclosed by the bevel (8) along its profile at the channel flank (5) with the radial direction increases towards the corner flank (7).

5. Pneumatic vehicle tyre according to one of Claims 1 to 4, **characterized in that** the bevel (8) along the channel flank (5) runs at an angle (β) with respect to the radial direction, which angle is up to 45° greater than the angle of inclination of the channel flank (5) relative to the radial direction.

6. Pneumatic vehicle tyre according to one of Claims 1 to 5, **characterized in that** the bevel (8) encloses an angle (β') with the radial direction up to 15° greater in its section running around the corner flank (7) than in its section running along the channel flank (5).

7. Pneumatic vehicle tyre according to one of Claims 1 to 6, **characterized in that** a height of the bevel (8) in the radial direction amounts to up to 3 mm.

8. Pneumatic vehicle tyre according to one of Claims 1 to 7, **characterized in that** the height of the bevel (8) becomes continuously greater between that end of the transverse channel (3) which is situated towards the inside of the tread and the corner flank (7).

9. Pneumatic vehicle tyre according to one of Claims 1 to 8, **characterized in that** the circumferential section (1) is arranged in the shoulder region of the tread.

10. Pneumatic vehicle tyre according to Claim 9, **characterized in that** the circumferential section is the outer shoulder region of the tread.

11. Pneumatic vehicle tyre according to Claim 9 or 10, **characterized in that** those ends of the transverse channels (3) which are situated towards the outside of the tread open via rounded transitions into shallow channels (9) of the shoulder decoration, which shallow channels run substantially in the circumferential direction of the tyre.

## Revendications

1. Pneu de véhicule comprenant une bande de roulement qui présente au moins une région périphérique (1) s'étendant dans la direction périphérique, structurée en forme de bloc, dans laquelle sont réalisées des rainures transversales (3) s'étendant dans la direction axiale, dont les extrémités situées du côté intérieur de la bande de roulement se trouvent à l'intérieur de la région périphérique (1) et présentent à chaque fois un flanc de coin (7) s'étendant entre la périphérie de la bande de roulement et le fond de rainure (4), qui s'étend dans l'extrémité de la rainure transversale (3) du côté intérieur de la bande de roulement en vue de dessus essentiellement en forme de demi-cercle et qui se prolonge au niveau du fond de rainure (4) par une portion d'extrémité (4a) du fond de rainure (4) qui présente essentiellement une forme de portion de sphère,
**caractérisé en ce**
**qu'**au moins l'un des flancs de rainure (5) limitant la rainure transversale (3) et le flanc de coin (7) sont biseautés et/ou chanfreinés au niveau de la périphérie de la bande de roulement, un biseau (8) s'étendant le long du flanc de rainure (5) et de l'arrondi du flanc de coin (7) dans le cas d'un nouveau pneu, lequel biseau se termine après avoir fait le tour de l'arrondi du flanc de coin.

2. Pneu de véhicule selon la revendication 1, **caractérisé en ce que** la portion d'extrémité essentiellement en forme de portion de sphère (4a) du fond de rainure (4) présente un rayon (R₁) de 2 mm à 4 mm, en particulier de 3 mm.

3. Pneu de véhicule selon la revendication 1, **caractérisé en ce que** la portion du biseau (8) s'étendant sur la périphérie du flanc de coin (7) se termine tangentiellement au niveau du deuxième flanc de rainure (6).

4. Pneu de véhicule selon l'une quelconque des revendications 1 à 3, **caractérisé en ce que** l'angle (β) que forme le biseau (8) le long de son étendue au niveau du flanc de rainure (5) avec la direction radiale augmente vers le flanc de coin (7).

5. Pneu de véhicule selon l'une quelconque des revendications 1 à 4, **caractérisé en ce que** le biseau (8) s'étend le long du flanc de rainure (5) suivant un angle (β) par rapport à la direction radiale, qui est supérieur de jusqu'à 45° à l'angle d'inclinaison du flanc de rainure (5) par rapport à la direction radiale.

6. Pneu de véhicule selon l'une quelconque des revendications 1 à 5, **caractérisé en ce que** le biseau (8) forme dans sa portion s'étendant autour du flanc de coin (7) avec la direction radiale un angle (β') supérieur de jusqu'à 15° à l'angle dans sa portion s'étendant le long du flanc de rainure (5).

7. Pneu de véhicule selon l'une quelconque des revendications 1 à 6, **caractérisé en ce que** la hauteur du biseau (8) dans la direction radiale est de jusqu'à 3 mm.

8. Pneu de véhicule selon l'une quelconque des revendications 1 à 7, **caractérisé en ce que** la hauteur du biseau (8) entre l'extrémité de la rainure transversale (3) du côté extérieur de la bande de roulement et le flanc de coin (7) augmente de manière continue.

9. Pneu de véhicule selon l'une quelconque des revendications 1 à 8, **caractérisé en ce que** la portion périphérique (1) est disposée dans la région de l'épaulement de la bande de roulement.

10. Pneu de véhicule selon la revendication 9, **caractérisé en ce que** la portion périphérique est la région d'épaulement extérieure de la bande de roulement.

11. Pneu de véhicule selon la revendication 9 ou 10, **caractérisé en ce que** les extrémités des rainures transversales (3) du côté extérieur de la bande de roulement débouchent par le biais de transitions arrondies dans des rainures peu profondes (9) de la décoration de l'épaulement qui s'étendent essentiellement dans la direction périphérique du pneu.
